# EUROPEAN PATENT SPECIFICATION

(11) **EP 1 162 606 B1**
(45) Date of publication and mention of the grant of the patent: **21.05.2003**
(21) Application number: 00127474.5
(22) Date of filing: 14.12.2000
(51) Int. Cl.: G11B 20/18, G11B 27/36, G11B 19/02

(54) **Disk recording method and apparatus providing for realtime monitoring**
Aufzeichnungsverfahren für Platten und Gerät mit Echtzeitüberwachung
Méthode d' enregistrement de disque et appareil pourvu d' un monitoring en temps réel

(30) Priority: 28.12.1999 JP 37318399
(43) Date of publication of application: 12.12.2001
(73) Proprietor: TEAC CORPORATION, Musashino-shi Tokyo (JP)
(72) Inventor: Tsuyuguchi, Hiroshi, Tokyo (JP); Sugiyama, Sho, Hannou-shi, Saitama-ken (JP)
(74) Representative: Strych, Werner Maximilian Josef, Dr.

(56) References cited:
- EP-A- 0 424 910
- US-A- 5 184 341
- US-A- 5 559 778
- PATENT ABSTRACTS OF JAPAN vol. 2000, no. 01, 31 January 2000 (2000-01-31) & JP 11 296312 A (SONY CORP), 29 October 1999 (1999-10-29)
- PATENT ABSTRACTS OF JAPAN vol. 2000, no. 01, 31 January 2000 (2000-01-31) & JP 11 283339 A (NIPPON COLUMBIA CO LTD), 15 October 1999 (1999-10-15)
- PATENT ABSTRACTS OF JAPAN vol. 1999, no. 05, 31 May 1999 (1999-05-31) & JP 11 053845 A (MATSUSHITA ELECTRIC IND CO LTD), 26 February 1999 (1999-02-26)

## Description

### BACKGROUND OF THE INVENTION

This invention relates to the recording of information, audio or otherwise, on and from a rotating data storage disk such as, typically, a recordable compact disk (CD-R). More specifically, the invention deals with a disk recorder, as typified by a CD-R recorder, including provisions for concurrent monitoring of the recording being executed on the disk.

CD-Rs with associated CD-R recorders are winning ever-increasing acceptance among, in particular, audiophiles, as well as specialists, experts, and enthusiasts in other fields. Among the advantages of CD-Rs are: (a) compatibility with CDs and CD-ROMs, recorded CD-Rs being reproducible on any audio CD players or CD-ROM drives; (b) large recording capacity (650 MB); and (c) low cost per unit of information recordable (hard magnetic disks are ten times as expensive per MB, and flexible magnetic disks, several tens of times). However, CD-Rs are unlike magnetic disks or magnetic tape in that they are recordable once for all. A failure in recording is irrecoverable, no rerecording being possible, so that the disk has to be discarded in that event.

Despite the once-for-all recording capability of CD-Rs, the CD-R recorders as so far manufactured and introduced to the market have not, as far as the instant applicant is aware, been equipped for monitoring of the recording in progress. The user has therefore had to wait for the completion of the recording to know whether his or her source has been recorded properly. In the worst case, therefore, he or she has realized that he or she has failed, and so thoroughly wasted his or her time, after a very long recording session, as in the recording of classical music.

An obvious remedy to this shortcoming might seem a two-beam monitoring method, such that the transducer simultaneously emits both write beam and read beam onto the disk so that the information being recorded may be reproduced substantially concurrently. This method would render the CD-R recorder inordinately complex and expensive in construction, not likely to be accepted by consumers in general.

A method of recording audio data in the form of data packets on a recording disc is known from JP-A- 11296312. The preamble of claim 1 is based on this document.

### SUMMARY OF THE INVENTION

The present invention seeks to enable realtime monitoring of the recording being made on a CD-R or like rotating data storage disk, in a simple, inexpensive, and thoroughly practicable way.

Also, in attaining the first recited objective, the present invention seeks to record desired information on a CD-R or the like in such a way that the recorded disk is reproducible on any commercial CD-R player, CD-ROM drive, or other rotating disk data storage apparatus.

Briefly stated in one aspect thereof, the invention concerns a method of recording a digital audio or like signal on a rotating data storage disk in a manner enabling realtime monitoring of the recording on the disk. Successive prescribed segments of a digital signal to be recorded are first stored, at least one at a time, on an input buffer memory, from which each signal segment is read out in time compression mode and recorded on a rotating data storage disk. The successive signal segments are thus recorded at prescribed time intervals. Each signal segment recorded on the disk is recovered therefrom during the time interval between the recording of this segment and that of the next and stored on an output buffer memory. From this memory, then, the signal segment is read out in time extension mode.

Thus the successive segments of the digital signal can be read out from the output buffer memory as a streamlined continuum, concurrently with the progress of the recording of that signal. The continuously recovered digital signal may be translated into an analog signal for monitoring.

According to another feature of the invention, the data storage disk is maintained throughout the recording operation in rotation at a constant linear velocity that is predetermined in relation to the extent to which each signal segment is time compressed when being read out from the Input buffer memory. Consequently, the signal segments can be recorded on the disk without intervening blanks, thereby permitting the disk to be played or read on any commercial device designed for use therewith.

Another aspect of the invention concerns a disk recording apparatus for carrying the above summarized method into practice. The apparatus can be constructed from largely conventional, expensive parts and components only, including the familiar transducer that uses but one beam for both writing and reading. The recording method according to the invention may be factory preprogrammed into the controller that is normally found in a CD-R recorder or the like.

The above and other objects, features and advantages of the invention and the manner of realizing them will become more apparent, and the invention itself will best be understood, from the following description taken together with the attached drawings showing the preferred embodiments of the invention.

### BRIEF DESCRIPTION OF THE DRAWINGS

FIG. 1 is a block diagram of the CD-R recorder embodying the principles of the present invention;
FIG. 2 is a block diagram of the transducer assembly of the FIG. 1 recorder;
FIG. 3 is a graph explanatory of the Intensity .of the laser beam emitted by the FIG. 2 transducer assembly in write mode and read mode;
FIG. 4 is a block diagram equivalently depicting the controller of the FIG. 1 recorder;
FIG. 5, consisting of (A) through (F), is a timing diagram explanatory of how a digitized audio or like input signal is recorded on the CD-R in the FIG. 1 recorder, and the recording concurrently monitored, according to the invention; and
FIGS. 6A, 6B and 6C show in combination a flowchart of the recording program introduced into the controller of the FIG. 1 recorder.

### DESCRIPTION OF THE PREFERRED EMBODIMENT

The present invention will now be described as embodied in a CD-R recorder for use with interchangeable CD-Rs. As has been standardized in the art, an unused CD-R has a preformed groove, or pregroove, cut in its surface in the form of a multiturn spiral, along which the beam of light is to be guided for writing. Irradiating the pregroove, the light beam conventionally provides a tracking error signal which is used for tracking control, that is, for keeping the beam spot centered on the track. The pregroove slightly "wobbles" in a regular zigzag fashion, as is also conventional in the art, such that when the beam scans it at a prescribed linear velocity for writing, the tracking error signal includes a wobble component with a standard frequency of 22.05 kHz.

The tracking error signal with the wobble component serves some important known purposes In addition to tracking control. One of them is disk speed control. The disk speed is servo controlled to maintain the wobble signal at 22.05 kHz. Another purpose is the provision of the positional information of the beam spot on the disk. The wobble frequency on the disk is frequency modulated at 22.05 kHz ± 1 kHz to include track address information known as ATIP (absolute time in the pregroove). This address information is therefore derivable from the wobble component of the tracking error signal.

As is also well known in the art, recording on CD-Rs is done under the control of write pulses. User data is written during the durations of the write pulses, and the wobbling pregroove is read during the pulse spacings to provide the tracking error signal with the wobble component. Writing is alternate, or almost concurrent, with reading. The light beam tracing the pregroove is alternately switched between write intensity and read intensity with the progress of alternate writing and reading. The required tracking information and address information are gained during such intermittent reading.

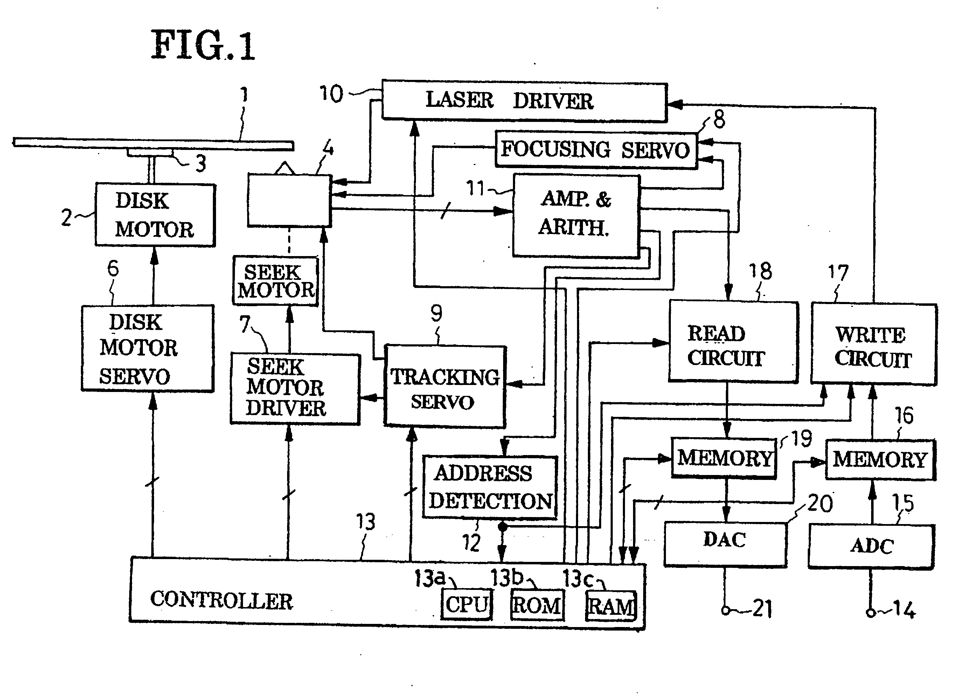

An example of CD-R recorder embodying the principles of this invention is illustrated in FIG. 1 and therein shown together with a CD-R 1. The exemplified CD-R recorder comprises:
(1) A disk motor 2 for directly driving a turntable 3 on which the CD-R 1 is mounted for recording.
(2) An optical read/write head or transducer assembly 4 for emitting a beam of light, usually a laser beam, for optically reading and writing data on the CD-R 1.
(3) A seek motor 5 coupled to the transducer assembly 4 for positioning the same on any track position on the CD-R 1.
(4) A disk motor servo circuit 6 for driving the disk motor 2 under servo control of the motor speed.
(5) A seek motor driver circuit 7 for controllably driving the seek motor 5.
(6) A focusing servo circuit 8 electrically connected to the transducer assembly 4 for keeping the light beam focused on the pregrooved surface of the CD-R 1.
(7) A tracking servo circuit 9 also connected to the transducer assembly 4 for keeping the light beam aligned on the pregroove or data track on the CD-R 1.
(8) A laser driver circuit 10 also connected to the transducer assembly 4 for causing the same to emit the light beam of controlled intensities.
(9) An amplifying and arithmetic circuit 11 also connected to the transducer assembly 4 for amplifying and further arithmetically processing the electric output therefrom.
(10) An address detection circuit 12 for detecting track addresses from the output from the amplifying and arithmetic circuit 11.
(11) A factory-preprogrammed controller 13 for supervising and controlling the operation of the complete CD-R recorder, particularly the recording operation with realtime monitoring according to the present invention.
(12) An analog-to-digital converter (ADC) 15 connected to an input terminal 14 for digitizing an analog input signal, such as audio signal, to be recorded.
(13) An input buffer memory 16 for inputting each of successive prescribed segments of the digitized input signal and putting each segment out in timecompression mode, such that time intervals are inserted between the signal segments.
(14) A write circuit 17 connected between input buffer memory 16 and laser driver circuit 10 for causing the transducer assembly 4 to record the input signal on the CD-R 1.
(15) A read circuit 18 for processing the output from the amplifying and arithmetic circuit 11 into a read data signal of more well defined waveform.
(16) An output buffer memory 19 for inputting the read data signal, still in' the form of time-compressed, spaced segments, and putting the same out in time extension mode, such that the signal segments are recombined into a streamlined continuum.
(17) A digital-to-analog converter (DAC) 20 connected between the output buffer memory 19 and an output terminal 21.

Replaceably mounted on the turntable 3, the CD-R 1 is driven directly by the disk motor 2. The disk 1 has its pregrooved surface shown directed downwardly in this figure, facing the transducer assembly 4 which is to be driven by the seek motor 5 across the spiraling pregroove on the disk. The disk motor 2 is capable of driving the disk 1 not only at the standard speed common to CDs and CD-Rs, and at a prescribed speed that is several times, or even several tens of times, as high as the standard speed, under the control of the disk motor servo circuit 6. The higher disk speed is needed for recording on the disk 1 with concurrent monitoring according to the invention, as will be detailed subsequently.

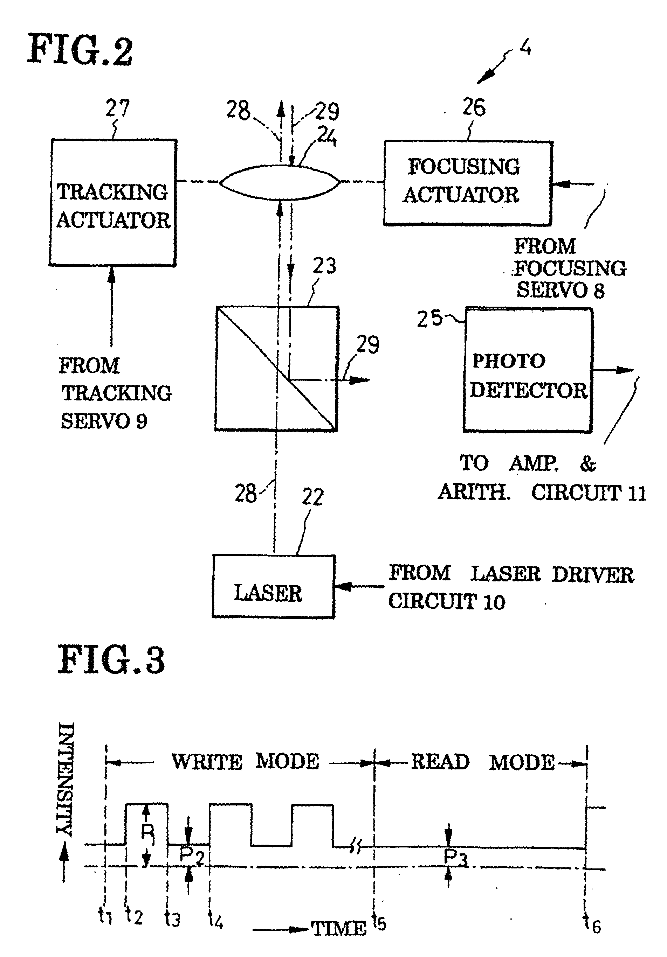

As illustrated in detail in FIG. 2, the transducer assembly 4 includes a light source shown as a laser 22 for emitting a beam of light 28 to be applied to the disk surface via an objective lens 24. A beam splitter 23 is positioned between the laser 22 and the objective 23 for passing the beam 28 from the laser 22 and reflecting the beam reflection 29 from the disk surface toward a photodetector 25, which translates the beam reflection into electric signals. The transducer assembly 4 further comprises a focusing actuator 26 such as a moving coil mechanically coupled to the objective 24 for keeping the laser beam 28 focused on the disk surface, and a tracking actuator 27, usually another moving coil, also coupled to the objective for keeping the laser beam centered on the track on the disk.

The laser 22 is conventionally controlled to emit a beam of different intensities depending upon whether it is creating a pit in the disk surface or not. As indicated in FIG. 3, the laser beam has two different intensities *P*₁ and *P*₂ in write mode lasting from *t*₁ to *t*₅, being of first intensity *P*₁ when creating a pit as from *t*₂ to *t*₃, and of second intensity *P*₂, less than the first *P*₁, when not creating a pit as from *t*ₛ to *t*₄. In read mode lasting from *t*₅ to *t*₆, on the other hand, the beam is of third intensity *P*₃, also less than the first *P*₁, possibly equal to the second *P*₂. The periods of the second beam intensity *P*_{*2*} during writing have been conventionally utilized solely for reading the wobbling pregroove for tracking control and address detection, but lend themselves to use for realtime monitoring of the recording according to this invention. The laser beam intensity is controlled as in FIG. 3 by the laser driver circuit 10, FIG. 1.

With reference back to FIG. 1 the transducer assembly 4 is driven by the seek motor 5 under the control of the seek motor driver circuit 7. To this driver circuit 7 there are supplied both seek data from the controller 13 and a seek control signal from the tracking servo circuit 9, enabling the driver circuit to control the seek motor 5 accordingly.

The photodetector 25, FIG. 2, of the transducer assembly 4 is conventionally constituted of a set of photodiodes, not shown, for converting the incident laser beam, reflected back from the disk surface, into electric signals. Connected to the photodetector 25, the amplifying and arithmetic circuit 11 comprises amplifiers, adders and subtracters for conventionally processing the photodetector output signals into a read data signal indicative of data that has been read from the disk 1, a focusing error signal indicative of the degree of beam defocusing on the disk. and a tracking error signal indicative of the degree of departure of the beam spot from the track. The read data signal is applied to the read circuit 18, the focusing error signal to the focusing servo circuit 8, and the tracking error signal to the tracking servo circuit 9.

Also of prior art design, the read circuit 18 comprises a wave-shaping circuit, a phase-locked-loop circuit, an eight-to-fourteen-modulation (EFM) decoder, an error detection and correction circuit, etc. Processing the incoming read data signal by all these circuit means, the read circuit 18 puts out binary read data representative of the information recovered from the disk 1, for delivery to the output buffer memory 19.

Inputting the noted focusing error signal from the amplifying and arithmetic circuit 11, the focusing servo circuit 8 puts out a signal for driving the moving-coil focusing actuator 26, FIG. 2, of the transducer assembly 4. The focusing actuator 26 when so driven causes the objective 24 to move toward and away from the disk surface in order to keep the beam 28 focused on the disk surface. The controller 13 is connected to the focusing servo circuit 8 for on-off control of the focusing servo and for switching control of the phase compensation characteristic.

The tracking servo circuit 9 responds to the tracking error signal from the amplifying and arithmetic circuit 11 by producing a signal for driving the tracking actuator 27, FIG. 2, of the transducer assembly 4. So driven, the tracking actuator 27 causes the objective 24 to travel back and forth parallel to the disk surface in order to keep the beam spot in centerline alignment with the wobbling pregroove on the disk surface.

The controller 13 is connected to the tacking servo circuit 9, too, for on-off control of the tracking servo, for switching control of the phase compensation characteristic, and for jumping control of the laser beam. The jumping control is such that, in response to jumping pulses from the controller 13, the tracking servo circuit 9 causes the tracking actuator 27 to move the objective radially of the disk, with the consequent jumping of the laser beam 28 from one track turn to another on the disk. Thus the tracking servo circuit 9 and the tracking actuator 27 act in combination as beam positioning means, as do the seek motor driver circuit 7 and the seek motor 5.

Also having an input connected to the amplifying and arithmetic circuit 11, the address detection circuit 12 detects track addresses by demodulating the wobble component of the output from the circuit 11 during writing and, during reading, by demodulating the subcode component. The addresses detected are delivered to the controller 13 and, during writing, to the write circuit 17 as well.

The write circuit 17 has an input connected to the analog input terminal 14 via the ADC 15 and the input buffer memory 16, and an output connected to the laser driver circuit 10. Received at the input terminal 14, the analog audio or like signal to be recorded is digitized by the ADC 15, and the digital output therefrom directed into the buffer memory 16. Under the direction of the controller 13, then, the digital input signal is read out from the memory 16 in successive, isolated segments in time compression mode, with intervals between the signal segments, for delivery to the write circuit 17.

The write circuit 17 is itself of known construction comprising an encoder for eight-to-fourteen modulation of the input digital data, error correction means, and means for adding address data to the user data as subcode.

Write pulses representative of the digital data to be recorded are fed from write circuit 17 to laser driver circuit 10, which latter circuit responds by controlling the laser beam intensity accordingly. The controller 13 is also connected to the laser driver circuit 10 to notify the same of whether the recorder is in write mode or read mode. There exists a transitional interval from write mode to read mode in this embodiment of the invention, during which Interval the laser beam is to be held at the lower intensity *P*₂ or *P*₃ for address reading and tracking control purposes.

The read circuit 18 has an input connected as aforesaid to the amplifying and arithmetic circuit 11, and an output connected to the analog output terminal 21 via the output buffer memory 19 and DAC 20. The output buffer memory 19 inputs from the read circuit 18 the read data signal in the form of spaced, time-compressed segments and puts out the data segments in time extension mode.

The DAC 21 delivers an analog equivalent of the digital output from the buffer memory 19 to the output terminal 21. A headphone or a loudspeaker system, both not shown, are to be connected to the output terminal 21 for monitoring.

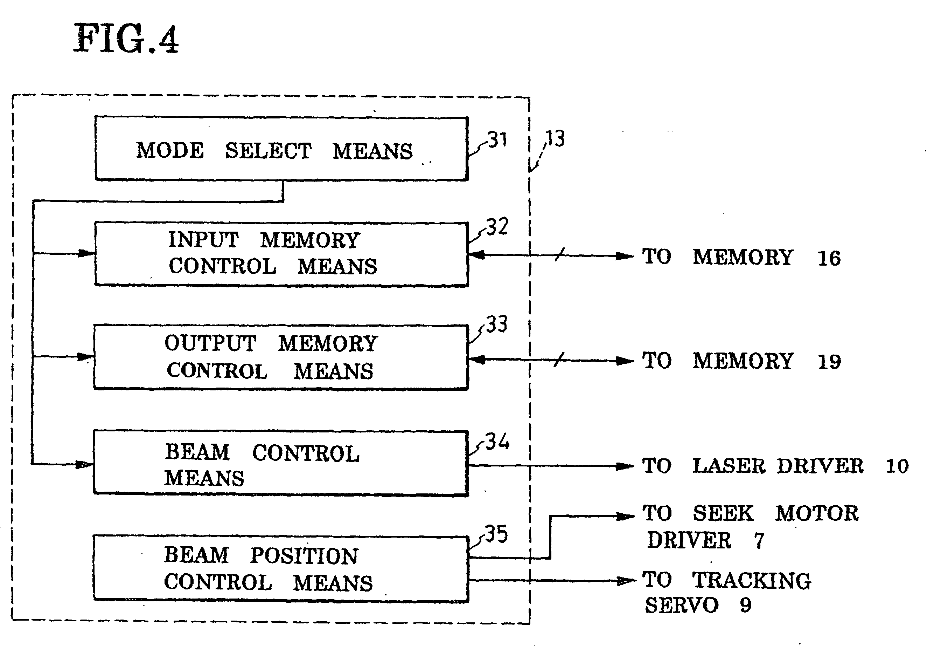

The controller 13 takes the form of a large-scale-integrated microprocessor or microcomputer including a central processor unit (CPU) 13*a*, a read-only memory 13*b*, and a random-access memory 13*c*. As Illustrated block-diagrammatically in FIG. 4, the controller 13 may be considered to equivalently comprise, for the purposes of this invention:
(1) mode select means 31 for switching between write mode and read mode;
(2) input memory control means 32 for controlling the input buffer memory 16;
(3) output memory control means 33 for controlling the output buffer memory 19;
(4) beam intensity control means 34 for controlling the intensity of the laser beam 28; and
(5) beam position control means 35 for controlling the position of the beam spot on the disk 1.

The mode select means 31 are shown connected to the means 32-34 for supplying thereto a signal indicative of write or read mode. As is conventional in the art, the controller 13 additionally comprises means for controlling the disk motor 2, means for controlling the focusing servo, etc. Such known additional means are not shown because of their irrelevance to the instant invention.

### Operation

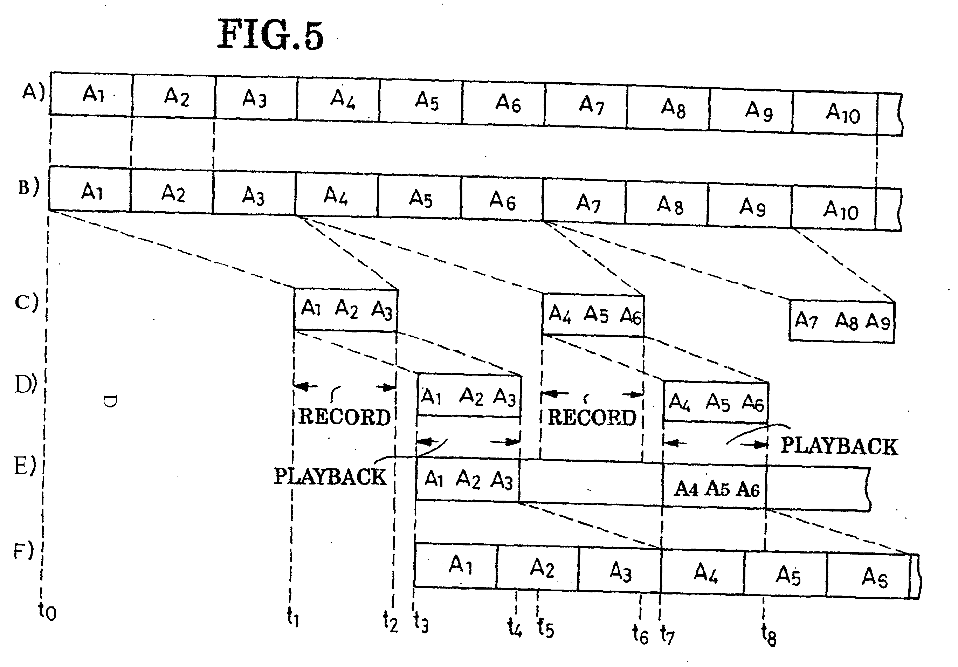

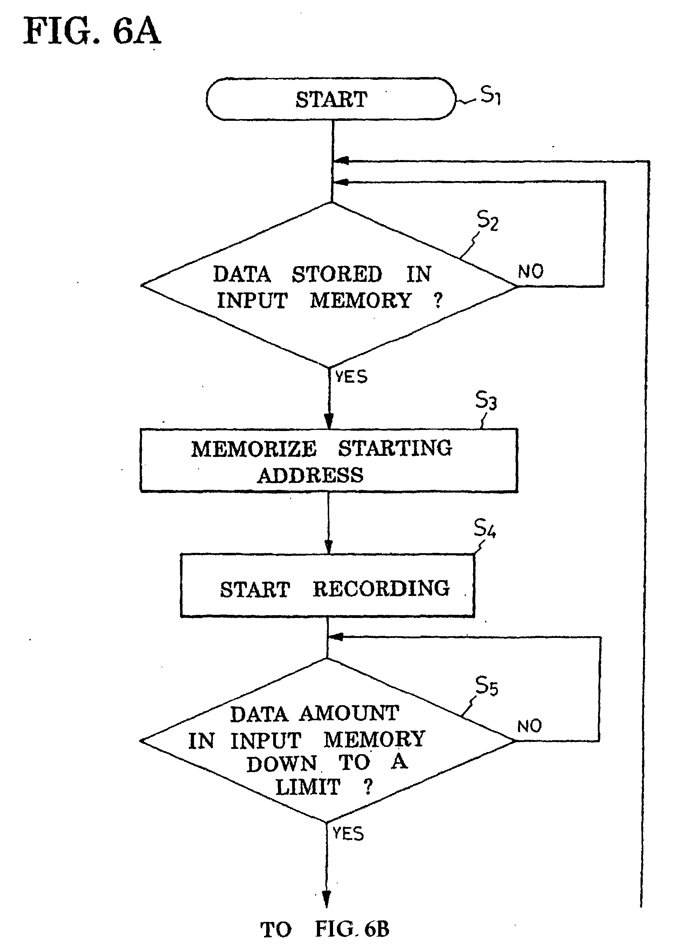

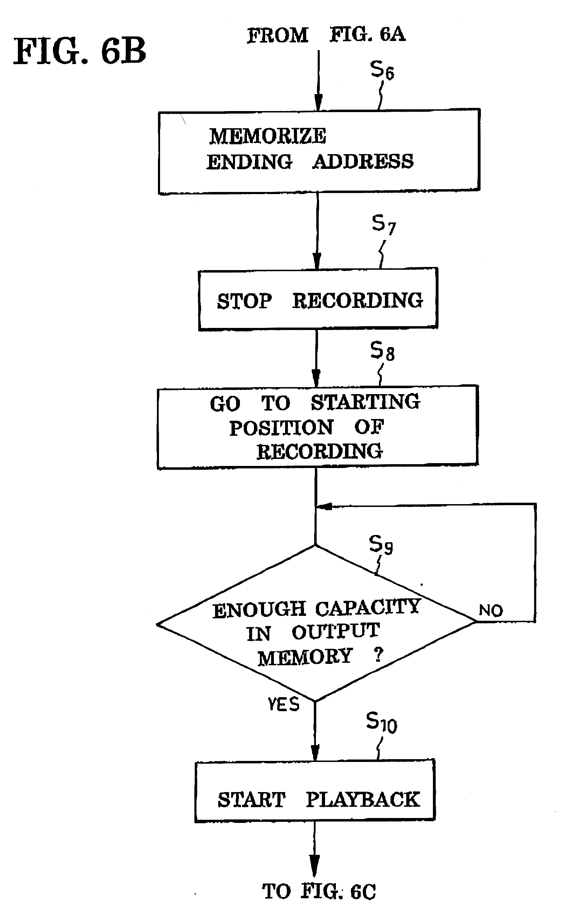

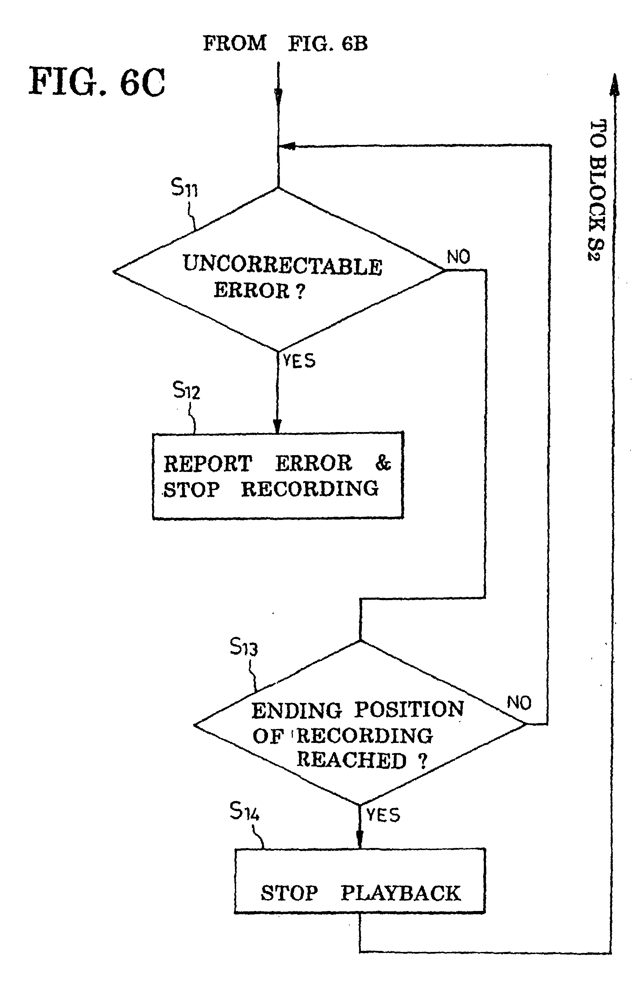

FIG. 5 indicates at (A) the analog audio or like input signal received at the input terminal 14 for recording. The analog input signal is digitized by the ADC 15 into the format depicted at (B) in FIG. 5, which is shown divided into a stream of arbitrary data blocks *A*₁-*A*₁₀ for convenience of illustration. These data blocks are temporarily stored in successive groups or segments on the input buffer memory 16. The subsequent recording process will be better understood by referring to the flowchart of FIGS. 6A-6C which indicates the recording program embodying the present invention, to be factory introduced into the controller 13.

The recording program starts at *S*₁, FIG. 6A, when the input terminal 14 begins to receive the analog signal to be recorded. At the node *S*₂ it is determined whether a prescribed amount of digital output from the ADC 15 has been stored on the input buffer memory 16. The prescribed amount is shown in FIG. 5 as three data blocks.

The answer yes to the node *S*₂ directs the routine to the block *S*₃, which dictates the storage of the track address on the disk 1 where the recording of the first signal segment is started. Besides being stored on the RAM 13c of the controller 13, the starting address is delivered to the write circuit 17 where it is added as subcode to the user data segment being recorded. It is understood that this and all other starting addresses to be used subsequently during recording are derived from the aforesaid ATIP data.

The recording of the first data segment starts at the next block *S*₄. As will be noted from (B) and (C) in FIG. 5, the data segment is recorded in time compression mode, such that the data segment is read out from the input memory 16 at a higher rate than that at which it was written thereon. In FIG. 5 the first data segment, consisting of the data blocks *A*₁-*A*₃, was written during a time period *t*₀-*t*₃ but is read out during a much shorter time period *t*₁*-t*₂. The thus time-compressed data segment with the subcode is recorded in the prescribed position on the disk 1.

As has been set forth with reference to FIG. 3, the beam intensity is switched between *P*₁ and *P*₂, as from *t*₁ to *t*₅ in FIG. 3, during the recording of the first data segment *A*₁-*A*₃ from *t*₁ to *t*₂ in FIG. 5; as well as of the second data segment *A*₄-*A*₆ from *t*₅ to *t*₆ in FIG. 5 and all the following data segments. The successive data segments are therefore recorded with concurrent tracking control of the laser beam and address detection.

It is understood that the CD-R 1 is now being driven at a constant linear velocity (CLV) that is from several times to several tens of times, typically four times, as high as the standard CLV common to CDs and CD-Rs. The actual CLV is to be determined in relation to how fast each data segment is read out from the input memory 16. In this manner, even though the transducer, assembly 4 has its laser beam modulated according to the successive data segments that are supplied in time compression mode, and hence with intervening time intervals. such data segments are recorded on the CD-R with no intervening blanks thereon. The CD-R thus recorded is therefore reproducible on any commercial CD players or CD-ROM drives.

Then comes another node *S*₅ which asks whether the amount of data currently stored on the input memory 16 is down to a prescribed limit, in order to determine when the write mode now in progress should be terminated. If it is, the track address where the recording of the first data segment ends is stored on the controller RAM 13*c* at the block *S*₆, FIG. 6A, and the recording is actually terminated at the next block *S*_{*7*}. Thus has been completed the recording of the first data segment *A*_{*1*}*-A*_{*3*} from *t*₁ to *t*₂ in FIG. 5.

Next comes the step of playing back the first data segment which has been just recorded, for monitoring purposes. The laser beam is therefore positioned at the starting address of the recording of the first data segment on the disk 1 according to the block *S*₈. It is then determined at the node *S*₉ if the output buffer memory 19 has enough capacity to store the complete first data segment *A*₁-*A*₃ to be recovered from the disk. This step, executed by the output memory control means 33, FIG. 4, of the controller 13, is recommended for the accuracy of reproduction obtainable.

Then the reproduction of the recorded first data segment *A*₁-*A*₃ is started at the next block *S*₁₀. With the disk 1 maintained at the same high CLV as during recording, the first data segment *A*₁-*A*₃ is recovered during a *t*₃-*t*₄ time interval, as at (D)in FIG. 5, still in a time-compressed state. The time interval *t*₃-*t*₄ should not exceed, preferably should be conveniently shorter than, each of the time intervals, as from *t*₂ to *t*₅, between the recordings of the successive data segments,

The reproduction of the first data segment *A*₁-*A*₃ is concurrent with the determination, according to the node *S*₁₁, FIG. 6C, of whether there exists an uncorrectable error in each EFM frame. If it does, the error is reported to the controller 13, which responds by suspending the recording at the block *S*₁₂. In cases where this CD-R recorder is being used as a computer peripheral, or has a display of its own, the detected error may be reported to the computer and exhibited on its display, or may be exhibited on the display of the CD-R recorder.

In the absence of any uncorrectable error, it is ascertained at the node *S*₁₃ whether the final address of the recording of the first data segment *A*₁-*A*₃ has been reached. The address in question is that stored on the controller RAM 13*c* at *t*₂ in FIG. 5 according to the flowchart block *S*₆, FIG. 6A. One cycle of recording operation comes to an end at *S*₁₄, and at *t*₄ in FIG. 5, when an address that has been read from the disk agrees with the final address on the controller RAM 13*c*. The next cycle is started at *S*₂ again.

After being conventionally processed in the read circuit 18, the first data segment *A*₁*-A*₃ which has been recovered from the disk from *t*₃ to *t*₄ as at (D) in FIG. 5 is then stored on the output buffer memory 19, FIG. 1, as at (E) in FIG. 5. Being still compressed in time, the stored first data segment is then read out therefrom in time extension mode, that is, from *t*₃ to *t*₇ as at (F) in FIG. 5, and subsequently reconverted into an analog equivalent by the DAC 21. The first data segment is thus reproduced on the original, normal time scale as a replica of that shown at (A) in FIG. 5.

Upon completion of the recovery of the first data segment *A*₁*-A*₃ from the disk 1 at *t*₄ in FIG. 5, the next data segment *A*₄-*A*₆ is recorded during the *t*₅*-t*₆ time interval in FIG. 5 through the same procedure as above. The starting address of this second data segment, to be stored on the controller RAM 13*c*, FIG. 1, at the block *S*₃, is the address where the fourth data block *A*₄ starts to be recorded, or the final address of the preceding data block *A*₃. As has been stated, no blanks are created between the successive data segments supplied to the transducer assembly 4 in time compression mode.

The second data segment *A*₄-*A*₆ thus recorded from *t*₆ to *t*₆ on the disk 1, as at (C) in FIG. 5, is immediately reproduced from *t*₇ to *t*₈, as at (D) in FIG. 5 and stored on the output buffer memory 19. From this memory 19 the second data segment *A*₄-*A*₆ is read out in time extension mode, from *t*₇ to *t*₉ as at (F) in FIG. 5, and in immediate succession to the reproduction of the first data segment *A*₁-*A*₃.

Thus, even though the input audio or like signal is recorded on, and recovered from, the CD-R 1 in isolated, time-compressed segments according to the invention, the signal emerges from the analog output terminal 21 as a streamlined continuum for realtime monitoring. If unsatisfied with the way his or her source is recorded, the user may immediately suspend the recording and so avoid any further waste of time.

In order to assure continuity of the user data on reproduction, each segment may be composed of, typically, ninety-eight EFM frames or integral multiples thereof. Further the user data may be so divided at zones of longest pit patterns, the frame synchronization patterns provided for frame identification purposes. The synchronization pattern is composed of an 11-bit long high level period, an 11-bit long low level period, and a two-bit long high level period.

### Possible Modification

Despite the foregoing detailed disclosure it is not desired that the present invention be limited by the exact showings of the drawings or by the description thereof. The following Is a brief list of possible modifications, alterations and adaptations which are all intended in the illustrated embodiments and so believed to fall within the scope of the invention:
1. The digital signal to be recorded could be introduced into the input buffer memory 16 from a source other than the ADC 15.
2. The digital signal recovered from the CD-R could be delivered from the output buffer memory 19 to a digital device other than the DAC 20.
3. The invention could be applied to magneto-optic storages as well.
4. The data track on the disk could be concentric circles instead of a multiturn spiral.

## Claims

1. A method of recording a digital audio or like signal on a rotating data storage disk in a manner enabling realtime monitoring of the recording on the disk, wherein successive segments of a digital input signal are stored, at least one at a time, on an input buffer memory (16), from which each signal segment is read out in time compression mode and recorded on a rotating data storage disk (1), so that the successive signal segments are recorded at prescribed time intervals, **characterized by** comprising the steps of recovering each recorded signal segment from the rotating disk during the time interval between the recording of this signal segment and that of the next, storing on an output buffer memory (19) the signal segment being recovered from the disk, and reading out the signal segment from the output buffer memory in time extension mode, whereby the successive segments of the digital signal can be read out from the output buffer memory as a streamlined continuum to enable realtime monitoring of the recording being made on the- disk.

2. A method of recording a digital audio or like signal on a rotating data storage disk as claimed in claim 1, **characterized in that** the data storage disk (1) is maintained in rotation at a constant linear velocity that is predetermined in relation to the extent to which each signal segment is time compressed when being read out from the input buffer memory (16), whereby the signal segments are recorded on the disk without intervening blanks.

3. A method of recording a digital audio or like signal on a rotating data storage disk as claimed in claim 1, **characterized by** further comprising the steps of ascertaining whether or not there is an uncorrectable error in each signal segment being recovered from the rotating disk, and, if there is, visually exhibiting the presence of an uncorrectable error in the recording and/or suspending the recording of the digital signal.

4. A method of recording a digital audio or like signal on a rotating data storage disk as claimed in claim 1, **characterized by** further comprising the steps of EFM encoding the successive signal segments being read out from the Input buffer memory in time compression mode, and EFM decoding the successive signal segments being recovered from the disk.

5. An apparatus for recording a digital audio or like signal on a rotating data storage disk in a manner enabling realtime monitoring of the recording on the disk, comprising disk drive means (2, 6) for imparting rotation to a data storage disk (1) at a desired speed, transducer means (4) for recording and playing back a digital signal on and from the rotating data storage disk, an input buffer memory (16) connected to input means (14) for successively storing, at least one at a time, prescribed segments of a digital signal supplied therefrom, input memory control means (32) connected to the input buffer memory for reading out each signal segment therefrom in time compression mode, a write circuit (17) connected between the input buffer memory and the transducer means for causing the latter to record on the rotating data storage disk the signal segment being read out from the input buffer memory in time compression mode, so that the successive signal segments are recorded at prescribed time intervals, mode select means (31) connected to the transducer means for causing the same to read each recorded signal segment on the rotating data storage disk during the time interval between the recording of this segment and that of the next segment, and a read circuit (18) connected to the transducer means for processing each signal segment read out from the disk, **characterized in that** an output buffer memory (19) is connected to the read circuit for storing each signal segment being read out from the disk, and that output memory control means (33) is connected to the output buffer memory for reading out the signal segment from the output buffer memory in time extension mode, whereby the successive segments of the digital signal can be read out from the output buffer memory as a streamlined continuum to enable realtime monitoring of the recording being made on the disk.

6. An apparatus for recording a digital audio or like signal on a rotating data storage disk as claimed in claim 5, **characterized in that** the input means comprises an input (14) for inputting an analog signal to be recorded, and an analog to digital converter (15) connected to the input for digitizing the analog input signal.

7. An apparatus for recording a digital audio or like signal on a rotating data storage disk as claimed in claim 5, **characterized in that** the output means comprises a digital to analog converter (20) connected to the output buffer memory (19) for converting into an analog equivalent the digital signal being read out therefrom, and 'an output (21) connected to the digital to analog converter.

## Patentansprüche

1. Verfahren zum Aufzeichnen eines digitalen Audiosignals oder dgl. auf einer drehenden Datenspeicherdiskette, bei dem eine Echtzeitüberwachung der Aufzeichnung auf die Diskette möglich ist, wobei wenigstens eines von mehreren aufeinanderfolgenden Segmenten eines digitalen Eingangssignals in einem Eingangspufferspeicher (16) gespeichert wird, von dem jedes Signalsegment im Zeitkomprimierungs-Modus ausgelesen und auf einer drehenden Datenspeicherdiskette (1) aufgezeichnet wird, so dass die aufeinanderfolgenden Signalsegmente in vorgegebenen Zeitintervallen aufgezeichnet werden,
**dadurch gekennzeichnet, dass**
das Verfahren die Schritte des
- Wiederherstellens jedes aufgezeichneten Signalsegments aus der drehenden Diskette während des Zeitintervalls zwischen dem Aufzeichnen dieses Signalsegments und dem des nächsten,
- Speicherns des aus der Diskette wiederhergestellten Signalsegments in einem Ausgangspufferspeicher (19), und
- Auslesens des Signalsegments vom Ausgangspufferspeicher im Zeitverlängerungs-Modus, wobei die aufeinanderfolgenden Segmente des digitalen Signals als ein rationelles Kontinuum vom Ausgangspufferspeicher ausgelesen werden können, um eine Echtzeitüberwachung der laufenden Aufzeichnung auf die Diskette zu ermöglichen, aufweist.

2. Verfahren zum Aufzeichnen eines digitalen Audiosignals oder dgl. auf einer drehenden Datenspeicherdiskette nach Anspruch 1,
**dadurch gekennzeichnet, dass**
sich die Datenspeicherdiskette (1) mit einer konstanten linearen Geschwindigkeit, die in Bezug auf den Grad der Zeitkomprimierung jedes Signals beim Auslesen vom Eingangspufferspeicher (16) vorgegeben ist, weiterdreht, so dass die Signalsegmente auf der Diskette ohne dazwischenliegende Leerzeichen aufgezeichnet werden.

3. Verfahren zum Aufzeichnen eines digitalen Audiosignals oder dgl. auf einer drehenden Datenspeicherdiskette nach Anspruch 1,
**dadurch gekennzeichnet, dass**
das Verfahren weiterhin den Schritt des
- Feststellens in jedem Signalsegment, das von der drehenden Diskette wiederhergestellt wird, ob ein unkorrigierbarer Fehler vorhanden ist oder nicht, und für den Fall, dass einer vorhanden ist, den Schritt des
- optischen Anzeigens des Vorhandenseins eines unkorrigierbaren Fehlers in der Aufzeichnung und/oder Unterbrechens der Aufzeichnung des digitalen Signals,
aufweist.

4. Verfahren zum Aufzeichnen eines digitalen Audiosignals oder dgl. auf einer drehenden Datenspeicherdiskette nach Anspruch 1,
**dadurch gekennzeichnet, dass**
es weiterhin die Schritte des
- EFM-Kodierens der aufeinanderfolgenden Signalsegmente, die vom Einganspufferspeicher im Zeitkomprimierungs-Modus ausgelesen werden, und des
- EFM-Dekodierens der aufeinanderfolgenden Signalsegmente, die von der Diskette wiederhergestellt werden,
aufweist.

5. Vorrichtung zum Aufzeichnen eines digitalen Audiosignals oder dgl. auf einer drehenden Datenspeicherdiskette, bei der eine Echtzeitüberwachung der Aufzeichnung auf der Diskette möglich ist, aufweisend
- eine Disketten-Antriebseinrichtung (2, 6), um eine Datenspeicherdiskette (1) mit einer Sollgeschwindigkeit in Drehung zu versetzen,
- eine Transducer-Einrichtung (4), um ein digitales Signal auf bzw. von der drehenden Datenspeicherdiskette aufzuzeichnen bzw. abzuspielen,
- einen Eingangspufferspeicher (16), der mit einer Eingabe-Einrichtung verbunden ist, zum nacheinander Speichern wenigstens eines von mehreren vorgegebenen Segmenten eines dadurch zugeführten digitalen Signals,
- eine Eingangsspeicher-Steuereinrichtung (32), die mit dem Eingangspufferspeicher verbunden ist, um jedes Signalsegment davon im Zeitkomprimierungs-Modus auszulesen,
- einen Schreib-Schaltkreis, der zwischen dem Eingangspufferspeicher und der Transducer-Einrichtung geschaltet ist, um letztere zu veranlassen, auf der drehenden Datenspeicherdiskette das Signalsegment, das vom Eingangspufferspeicher im Zeitkomprimierungs-Modus ausgelesen wird, aufzuzeichnen, so dass die aufeinanderfolgenden Signalsegmente in vorgegebenen Zeitintervallen aufgezeichnet werden,
- eine Modus-Auswahleinrichtung (31), die mit der Tansducer-Einrichtung verbunden ist, um diese zu veranlassen, jedes aufgezeichnete Signalsegment auf der drehenden Datenspeicherdiskette während des Zeitabschnitts zwischen der Aufzeichnung eines Segments und der Aufzeichnung des nächsten Segments zu lesen, und
- ein Lese-Schaltkreis (18), der mit der Transducer-Einrichtung verbunden ist, um jedes Signalsegment, das von der Diskette gelesen wird, zu verarbeiten,
**dadurch gekennzeichnet, dass**
- ein Ausgangspufferspeicher (19) mit dem Lese-Schaltkreis verbunden ist, um jedes Signalsegment, das von der Diskette ausgelesen wird, zu speichern, und
- eine Ausgangsspeicher-Steuereinrichtung (33) mit dem Ausgangspufferspeicher verbunden ist, um das Signalsegment vom Ausgangspufferspeicher im Zeitverlängerungs-Modus auszulesen; so dass die aufeinanderfolgenden Segmente des digitalen Signals vom Ausgangspufferspeicher als ein rationelles Kontinuum ausgelesen werden können, um eine Echtzeitüberwachung der laufenden Aufzeichnung zu ermöglichen.

6. Vorrichtung zum Aufzeichnen eines digitalen Audiosignals oder dgl. auf einer drehenden Datenspeicherdiskette nach Anspruch 5,
**dadurch gekennzeichnet, dass**
- die Eingabe-Einrichtung einen Eingang (14) zum Zuführen eines analogen Signals, das aufgezeichnet werden soll, und
- einen Analog/Digital-Wandler (15), der mit dem Eingang zum Digitalisieren des analogen Eingangssignals verbunden ist,
aufweist.

7. Vorrichtung zum Aufzeichnen eines digitalen Audiosignals oder dgl. auf einer drehenden Datenspeicherdiskette nach Anspruch 5,
**dadurch gekennzeichnet, dass**
die Ausgabe-Einrichtung
- einen Digital/Analog-Wandler (20), der mit dem Ausgangspufferspeicher (19) verbunden ist, um das digitale Signal, das davon ausgelesen wird, in ein analoges Äquivalent umzuwandeln, und
- einen Ausgang (21), der mit dem Digital/Analog-Wandler verbunden ist, aufweist.

## Revendications

1. Procédé d'enregistrement d'un signal numérique audio ou analogue sur un disque rotatif de stockage de données d'une manière permettant une surveillance en temps réel de l'enregistrement sur le disque, dans lequel des segments successifs d'un signal d'entrée numérique sont stockés, au moins un à la fois, sur une mémoire tampon d'entrée (16) de laquelle chaque segment de signal est extrait en mode de compression temporelle et enregistré sur un disque rotatif de stockage de données (1), de sorte que les segments de signal successifs sont enregistrés à intervalles de temps prescrits, **caractérisé en ce qu'**il comprend les étapes de : récupération de chaque segment de signal enregistré à partir du disque rotatif pendant l'intervalle de temps entre l'enregistrement de ce segment de signal et celui du segment suivant ; stockage, sur une mémoire tampon de sortie (19), du segment de signal récupéré à partir du disque ; et lecture du segment de signal à partir de la mémoire tampon de sortie en mode d'extension temporelle, de sorte que les segments successifs du signal numérique peuvent être extraits de la mémoire tampon de sortie en continuité directe pour permettre la surveillance en temps réel de l'enregistrement effectué sur le disque.

2. Procédé d'enregistrement d'un signal numérique audio ou analogue sur un disque rotatif de stockage de données selon la revendication 1, **caractérisé en ce que** le disque de stockage de données (1) est maintenu en rotation à une vitesse linéaire constante qui est prédéterminée en fonction du degré auquel chaque segment de signal est soumis à une compression temporelle lorsqu'il est extrait de la mémoire tampon d'entrée (16), de sorte que les segments de signal sont enregistrés sur le disque sans blancs intermédiaires.

3. Procédé d'enregistrement d'un signal numérique audio ou analogue sur un disque rotatif de stockage de données selon la revendication 1, **caractérisé en ce qu'**il comprend en outre les étapes de vérification de ce qu'il y a ou non une erreur non corrigible dans chaque segment de signal récupéré à partir du disque rotatif et, s'il y en a, indication visuelle de la présence d'une erreur non corrigible dans l'enregistrement et/ou suspension de l'enregistrement du signal numérique.

4. Procédé d'enregistrement d'un signal numérique audio ou analogue sur un disque rotatif de stockage de données selon la revendication 1, **caractérisé en ce qu'**il comprend en outre les étapes de codage par modulation de huit-à-quatorze (EFM) des segments de signal successifs extraits de la mémoire tampon d'entrée en mode de compression temporelle, et de décodage EFM des segments de signal successifs récupérés à partir du disque.

5. Appareil pour l'enregistrement d'un signal numérique audio ou analogue sur un disque rotatif de stockage de données d'une manière permettant une surveillance en temps réel de l'enregistrement sur le disque, comprenant des moyens d'entraînement de disque (2, 6) pour communiquer une rotation à un disque de stockage de données (1) à une vitesse désirée, des moyens de transduction (4) pour enregistrer et reproduire un signal numérique sur et à partir du disque rotatif de stockage de données, une mémoire tampon d'entrée (16) connectée à des moyens d'entrée (14) pour stocker successivement, au moins un à la fois, des segments prescrits d'un signal numérique venant des moyens d'entrée, des moyens de commande de mémoire d'entrée (32) connectés à la mémoire tampon d'entrée pour extraire chaque segment de signal de cette mémoire en mode de compression temporelle, un circuit d'écriture (17) connecté entre la mémoire tampon d'entrée et les moyens de transduction pour que ces derniers enregistrent sur le disque rotatif de stockage de données le segment de signal extrait de la mémoire tampon d'entrée en mode de compression temporelle de sorte que les segments de signal successifs sont enregistrés à intervalles de temps prescrits, des moyens de sélection de mode (31) connectés aux moyens de transduction pour que ces derniers lisent chaque segment de signal enregistré sur le disque rotatif de stockage de données pendant l'intervalle de temps entre l'enregistrement de ce segment et celui du segment suivant, et un circuit de lecture (18) connecté aux moyens de transduction pour traiter chaque segment de signal extrait du disque, **caractérisé en ce qu'**une mémoire tampon de sortie (19) est connectée au circuit de lecture pour stocker chaque segment de signal extrait du disque, et **en ce que** des moyens de commande de mémoire de sortie (33) sont connectés à la mémoire tampon de sortie pour extraire le segment de signal de la mémoire tampon de sortie en mode d'extension temporelle, de sorte que les segments successifs du signal numérique peuvent être extraits de la mémoire tampon de sortie en continuité directe permettant une surveillance en temps réel de l'enregistrement effectué sur le disque.

6. Appareil pour l'enregistrement d'un signal numérique audio ou analogue sur un disque rotatif de stockage de données selon la revendication 5, **caractérisé en ce que** les moyens d'entrée comprennent une entrée (14) pour l'entrée d'un signal analogique à enregistrer, et un convertisseur analogique /numérique (15) connecté à l'entrée pour la numérisation du signal d'entrée analogique.

7. Appareil pour l'enregistrement d'un signal numérique audio ou analogue sur un disque rotatif de stockage de données selon la revendication 5, **caractérisé en ce que** les moyens de sortie comprennent un convertisseur numérique / analogique (20) connecté à la mémoire tampon de sortie (19) pour convertir en un équivalent analogique le signal numérique extrait de la mémoire, et une sortie (21) connectée au convertisseur numérique /analogique.
